# EUROPÄISCHE PATENTANMELDUNG

(11) **EP 2 851 329 A1**
(43) Veröffentlichungstag der Anmeldung: **25.03.2015**
(21) Anmeldenummer: 14184397.9
(22) Anmeldetag: 11.09.2014
(51) Int. Cl.: B66C 23/62, B66C 23/36

(54) **Modulare Kran-Rüstwinde**

(30) Priorität: 24.09.2013 DE 202013008486 U
(71) Anmelder: Manitowoc Crane Group France SAS, 69574 Dardilly Cedex (FR)
(72) Erfinder: Mohr, Waldemar, 26384 Wilhelmshaven (DE)
(74) Vertreter: Schwabe - Sandmair - Marx

(57) **Zusammenfassung**

Kran-Rüstwinde (10), insbesondere für einen Mobilkran, wobei sie als transportable, modulare Einheit ausgestaltet ist, deren windenseitiges Aufhängungselement (19) zur Montage am Kran ein sicherbares Schnellmontagesystem (14, 15, 16) umfasst.

## Beschreibung

Die vorliegende Erfindung betrifft eine modulare Kran-Rüstwinde sowie deren technisches Umfeld, insbesondere ihre Aufhängung und damit ausgestattete Krane.

Solche Rüstwinden, die auch Rüst- und Einzugswinden genannt werden, werden zur Erleichterung des Rüstvorgangs eines Krans, insbesondere eines Mobilkrans, verwendet. Mit der Winde kann beispielsweise das Haupthubseil für die verschiedenen Rüstzustände nach vorne gezogen werden.

Es ist bekannt, solche Rüst- und Einzugswinden am Drehtisch von Mobilkranen als feste, einen integralen Bestandteil des Kranaufbaus bildende Einheiten zu verbauen. Durch die hierbei verwendete hohe Integration der Bauteile werden solche Winden gemäß dem Stand der Technik schlecht zugänglich für Entriegelungs- oder Bedienungsmaßnahmen und ihre Flexibilität im Einsatz ist gering.

Es ist die Aufgabe der vorliegenden Erfindung, eine Kran-Rüstwinde, insbesondere für einen Mobilkran, bereitzustellen, welche die oben aufgezeigten Nachteile des Standes der Technik zumindest teilweise überwindet. Insbesondere soll die Funktionalität insgesamt optimiert werden.

Diese Aufgabe wird durch eine Kran-Rüstwinde gemäß dem Anspruch 1, durch eine Aufhängung für eine solche Kran-Rüstwinde gemäß dem Anspruch 8 sowie durch einen Kran gemäß dem Anspruch 12 gelöst. Die Unteransprüche definieren bevorzugte Ausführungsformen der Erfindung.

Eine erfindungsgemäße Kran-Rüstwinde ist insbesondere für einen Mobilkran geeignet und als transportable, modulare Einheit ausgestaltet, deren windenseitiges Aufhängungselement zur Montage am Kran ein sicherbares Schnellmontagesystem umfasst. Wenn an dieser Stelle von einer "modularen Einheit" gesprochen wird, so ist damit gemeint, dass die Rüstwinde als ein einziges, abgrenzbares Modul zur Verfügung gestellt wird, so dass es als komplette Einheit transportiert werden kann. Natürlich ist damit nicht ausgeschlossen, dass auch die Winde selbst aus einzelnen modularen Einheiten besteht, die in Modulbauweise zusammengebaut werden können - Einzelheiten zu besonderen Ausführungsformen hierzu werden später noch aufgezeigt.

Mit anderen Worten wird die erfindungsgemäße Kran-Rüstwinde also als ein in sich geschlossenes und als Ganzes montierbares oder demontierbares System bereitgestellt, das mithilfe seines sicherbaren Schnellmontagesystems, das windenseitig (also an der Winde) vorgesehen ist, ohne großen technischen Aufwand am Kran an geeigneter Stelle befestigt werden kann. Weil damit schon grundsätzlich die Befestigung an verschiedenen oder mehreren Stellen am Kran ermöglicht wird, erhöht sich die Einsatzflexibilität für solche erfindungsgemäßen Winden stark. Ferner können Sie an gut zugänglichen Stellen angeordnet werden, wobei die Montage- und Rüstseiten verringert werden. Ein großer Vorteil der erfindungsgemäßen Kran-Rüstwinde besteht auch darin, dass sie als Zusatzausrüstung bereitgestellt bzw. verkauft werden kann und durch einfache Anpassungen alle möglichen Krane bzw. Mobilkrane mit dieser Winde ausgestattet werden können. Die Bedienbarkeit wird verbessert, weil sie bei der Auswahl des Anbringungsortes gut berücksichtigt werden kann.

Gemäß einer Ausführungsform ist die Kran-Rüstwinde als nach außen funktionell abgeschlossenes Modul aufgebaut, das alle funktionswesentlichen Windenbauteile aufweist. Speziell diese Ausgestaltung macht den flexiblen Einsatz auch bei unterschiedlichen Krantypen sehr einfach.

Bei einer Ausgestaltung ist die Kranwinde als Modul mit einer in einem Stahlbaurahmen gelagerten Seilwinde und einem an dem Stahlbaurahmen angeordneten, windenseitigen Aufhängungselement aufgebaut. Wie oben schon angedeutet, kann die Winde selbst als einzelnes Modul angesehen, jedoch auch zusätzlich gemäß dieser Ausführungsform aus wenigen, modulartig bereitgestellten Bauelementen bzw. Baueinheiten aufgebaut sein, was wiederum den Zusammenbau der Rüstwinde, ihre Wartung und ihren Betrieb erleichtert. Dies geht soweit, dass praktisch nur die Energieversorgung neben der Aufhängung am Kran bereitgestellt werden muss. Die Winde ist damit, auch in ihrer oben beschriebenen ganz allgemeinen Form, ein autark betreibbares Bauteil.

Bei einer Gestaltungsvariante weist die Kran-Rüstwinde eine einseitige Aufhängung bzw. ein nur an einer ihrer Seiten angeordnetes Aufhängungselement auf. Dabei ist es einerseits möglich, ein Aufhängungselement als Einhängesystem mit Ausrutschsicherung bereitzustellen, wobei andererseits, wieder in einer noch detaillierteren Ausgestaltung, die Aufhängung einen Einhängebügel oder Einhängebolzen umfassen kann. Gerade ein Einhängesystem ermöglicht eine sehr schnelle Anbringung, und Bolzensicherungen können in jedweder Stärke und in allen Fällen verlässlich sowie raumsparend bereitgestellt werden, so dass diese spezielle Ausführungsform die Vorteile der erfindungsgemäßen Kran-Rüstwinde noch besonders gut hervor bringt. Wie schon oben angedeutet, kann das sicherbare Schnellmontagesystem einen Sicherungsbolzen umfassen.

Gemäß einem weiteren Aspekt betrifft die vorliegende Erfindung eine Aufhängung für eine Kran-Rüstwinde, wie sie hierin in verschiedenen Ausführungen beschrieben wird, wobei die Aufhängung ein kranseitiges Aufhängungselement zur Montage der Kran-Rüstwinde aufweist, das ein zum Schnellmontagesystem der Rüstwinde komplementäres Montagesystem umfasst. Dabei ist es möglich, das Aufhängungselement so zu gestalten, dass es zur einseitigen Montage der Rüstwinde, insbesondere als einseitiger Freiträger ausgebildet ist. Ein Träger mit einer Bügel- oder Bolzeneinhängeaufnahme kann vorgesehen werden, und in einer weiteren Ausführungsform hat das kranseitige Aufhängungselement einen Träger mit einer Aufnahme für einen Sicherungsbolzen.

Mit anderen Worten bildet die Aufhängung das Gegenstück zum windenseitigen Aufhängungselement und hat ein weiteres Schnellmontagesystem, das mit dem Schnellmontagesystem der Kran-Rüstwinde zusammenwirkt. Die Vorteile der oben angesprochenen unterschiedlichen Ausführungen sind weiter oben schon erläutert worden und gelten natürlich auch für die erfindungsgemäße Aufhängung.

Nach einem weiteren erfindungsgemäßen Aspekt wird ferner ein Kran offenbart, der eine Rüstwinde aufweist, wie sie oben und hierin in verschiedenen Ausführungsformen beschrieben ist, und/oder eine Aufhängung, wie sie ebenfalls oben und hierin in verschiedenen Ausführungsformen beschrieben wird.

Es gibt einige Stellen am Kran, an denen gemäß der vorliegenden Erfindung ein kranseitiges Aufhängungselement angeordnet werden kann, wobei besondere Vorteile entstehen. Wenn, wie nach der vorliegenden Erfindung möglich, mehrere kranseitige Aufhängungselemente bereitgestellt werden, kann die Einsatzposition je nach Rüstzustand geeignet ausgewählt werden. Aber auch wenn nur eine einzige Position vorgesehen ist, hat das Kran-Rüstwinden-System die Vorteile, die mit der Modularität einhergehen und oben schon beschrieben worden sind. Diese Vorteile umfassen beispielsweise die Möglichkeit der Bereitstellung der Rüstwinde als Zusatzausrüstung für verschiedene Krane sowie die Vorteil hinsichtlich der Wartung und Bedienung.

Eine Positionierungsmöglichkeit ist die Anordnung des kranseitigen Aufhängungselements an bzw. auf einem Gegengewichtselement, wobei insbesondere die freie Zugänglichkeit und die damit verbundene erleichterte Bedienbarkeit sowie die einfache Möglichkeit, verschiedene geeignete Rüstpositionen zur Verfügung zu stellen, zum Tragen kommen.

Eine andere Möglichkeit der Anordnung ist die Hilfshubwerk-Befestigung, wobei bei vielen Kranen gerade hier eine hohe Arbeitssicherung für den Kranfahrer beim Bedienen der Rüstwinde gegeben ist, weil solche Einsatzpositionen meist über feste Aufstiege zu erreichen sind. An beiden genannten Einsatzpositionen sind oft rutschfeste Standflächen vorgesehen, auch Abstützeinrichtungen wie Geländer. Durch die gute Zugänglichkeit besteht die Möglichkeit, das Wickelverhalten der Winde zu kontrollieren und zu korrigieren und wegen der geeigneten Positionierung im Umfeld von verfügbarem Raum kann die Bedienung der Rüstwinde (hand set) in unmittelbarer Nähe der Winde erfolgen, was einen sehr guten Überblick über die Arbeiten gewährleistet.

Die Erfindung wird im Weiteren anhand verschiedener Ausführungsformen und unter Bezugnahme auf die beiliegenden Zeichnungen näher erläutert. Es zeigen:
- Figur 1: die Anordnung einer erfindungsgemäßen Kran-Rüstwinde am hinteren Drehtisch, an der Hilfshubwerk-Befestigung eines Mobilkrans;
- Figur 2: die Anordnung einer erfindungsgemäßen Kran-Rüstwinde auf einem Gegengewichtselement eines Mobilkrans;
- Figur 3: die modulare Kran-Rüstwinde in einer erfindungsgemäßen Ausführungsform in einer schrägen Ansicht; und
- Figur 4: die Rüstwinde der Figur 3 aufgehängt an einer kranseitigen Aufhängung.

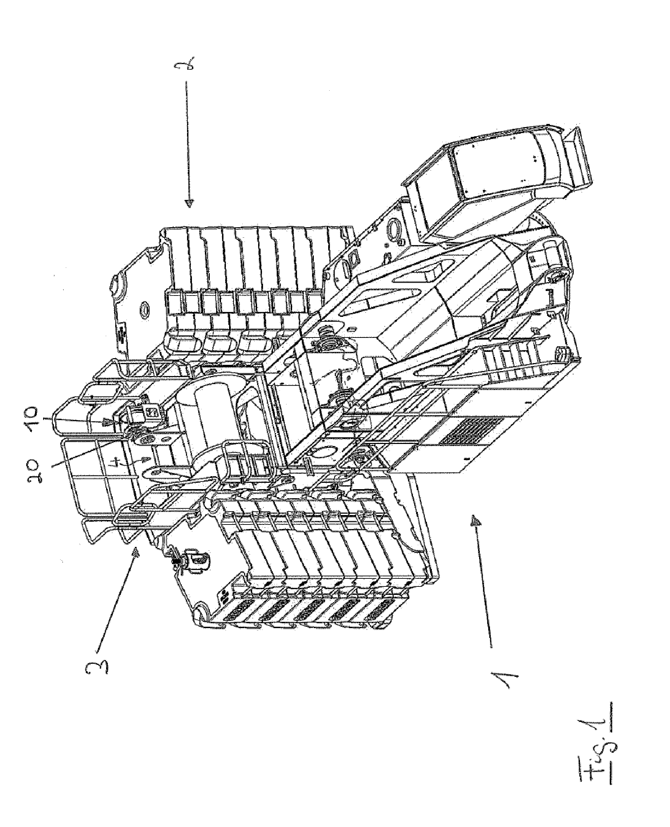

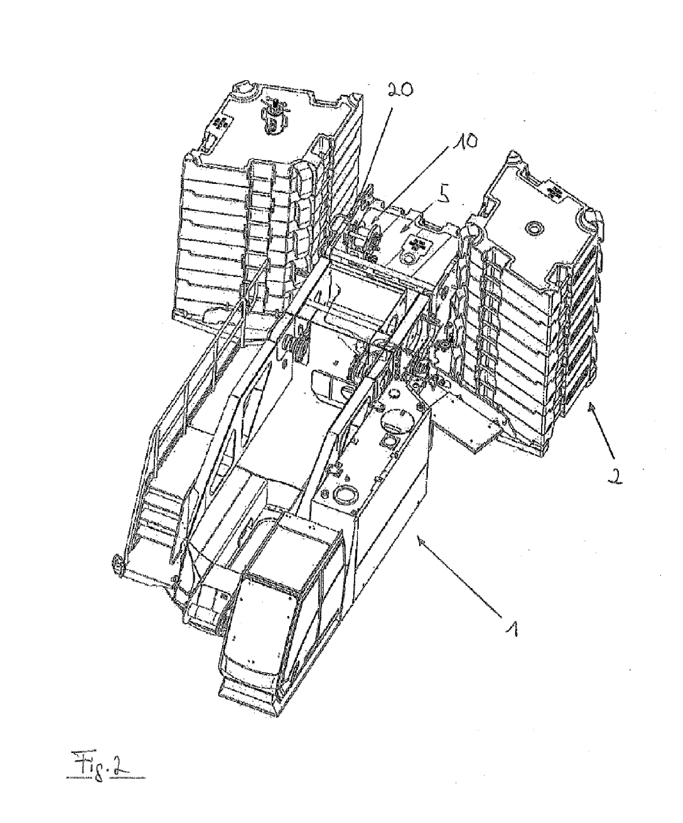

Zunächst sollen in dieser Beschreibung anhand der Figuren 1 und 2 verschiedene Einsatz- bzw. Positionierungsmöglichkeiten für eine Kran-Rüstwinde gemäß der Erfindung aufgezeigt werden. In den Figuren 1 und 2 bezeichnet das Bezugszeichen 1 insgesamt einen Teil des Oberwagens eines Mobilkrans, wobei die Gegengewichtselemente mit dem Bezugszeichen 2 angedeutet sind. Ferner weist in beiden Figuren das Bezugszeichen 10 auf eine Kran-Rüstwinde oder Rüst- und Einzugswinde 16 hin, während mit dem Bezugszeichen 20 ein kranseitiges Aufhängungselement für diese Winde 10 bezeichnet ist.

In der Figur 1 ist nun zu sehen, dass am hinteren oberen Drehtischbereich 3 eine Befestigung 4 mit zwei äußeren Ständern vorgesehen ist, die zur Anbringung eines hier nicht gezeigten Hilfshubwerkes dient. Der rechte, der beiden Träger wird bei dieser Ausführungsform noch zusätzlich so verwendet, dass an seiner Außenseite die Rüstwinde befestigt ist. Der Vorteil einer solchen Positionierung wird hier besonders gut ersichtlich, weil im Bereich der Rüstwinde 10 einerseits feste Aufstiege und Geländer vorhanden sind und andererseits die Bedienung in unmittelbarer Nähe erfolgen kann.

Bei der Ausführungsform gemäß Figur 2 ist zu sehen, dass das kranseitige Aufhängungselement 20 auf einem Gegengewichtselement 5 bereitgestellt wird und hier die Rüstwinde 10 trägt. Auch dabei ergibt sich eine gute Zugänglichkeit und durch das Bereitstellen von mehreren geeigneten Befestigungsmöglichkeiten auf dem Gegengewicht, d.h. an mehreren Stellen, kann die Winde in sehr einfacher Weise in besonders vorteilhafter Lage für die jeweiligen Arbeiten angebracht werden.

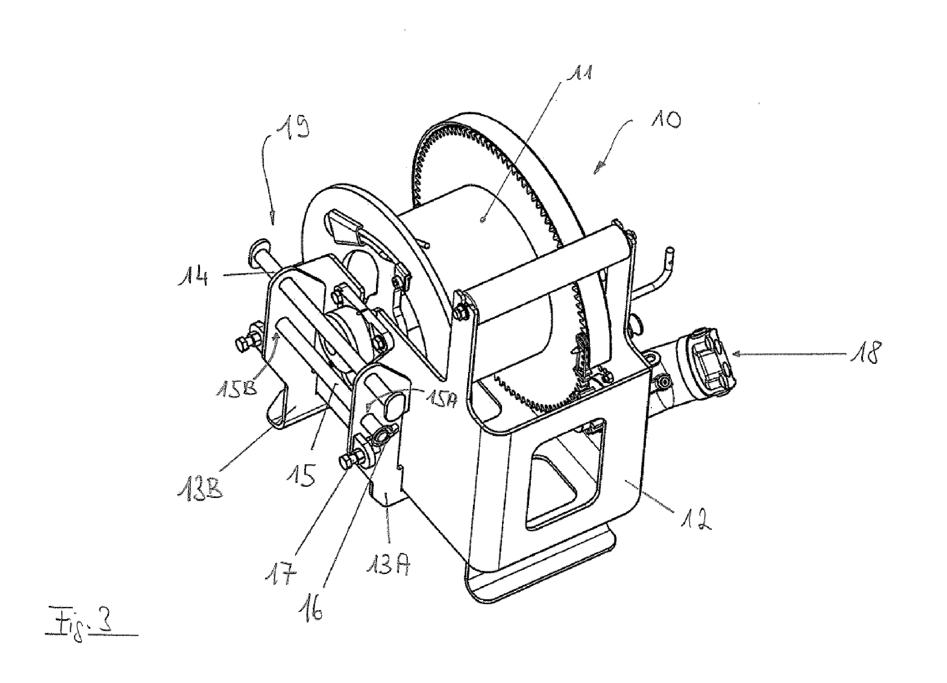

Der Figur 3 ist nun zu entnehmen, wie ein Rüstwinden-Modul 10 in einer möglichen Ausführungsform aussieht. Dabei gibt es vier grundsätzliche Baugruppen, nämlich die Seilwinde 11 mit ihren Maschinenbauteilen, den Stahlrahmen 12 zur Lagerung der Seilwinde 11 und der anderen Anbauteile, den Versorgungsanschluss 18 und das windenseitige Schnellmontagesystem bzw. Aufhängungselement, das insgesamt das Bezugszeichen 19 trägt. Das Aufhängungselement 19 bildet zusammen mit dem Stahlrahmen 12 einen selbsttragenden Rahmen, so dass zusätzliche Halterungen entfallen können und entsprechende Kosteneinsparungen und Gewichtsreduzierungen möglich werden.

Das Aufhängungselement 19 weist zwei senkrecht vom Rahmen 12 abstehende Trägerplatten 13A und 13B auf, an denen die weiteren Schnellmontagesystem-Elemente angebracht sind. Diese umfassen einen, in zwei fluchtenden Durchgangslöchern gelagerter Einhängebolzen 14, der an seinen beiden Enden mit nicht bezeichneten Platten versehen ist, um nicht aus seiner Lochführung ausrutschen zu können. Weiter unten ist ebenfalls in einer Führung mit zwei fluchtenden Löchern in den Trägern 13A und 13B der Sicherungsbolzen 15 geführt, der zwar herausnehmbar gestaltet ist, jedoch an seinen Enden mit einer Sicherung versehen werden kann, die hier als Klappstecker 16 ausgeführt ist. Ferner sind unterhalb der Durchgangslöcher für den Sicherungsbolzen noch zwei einstellbare Abstandshalter 17 gezeigt.

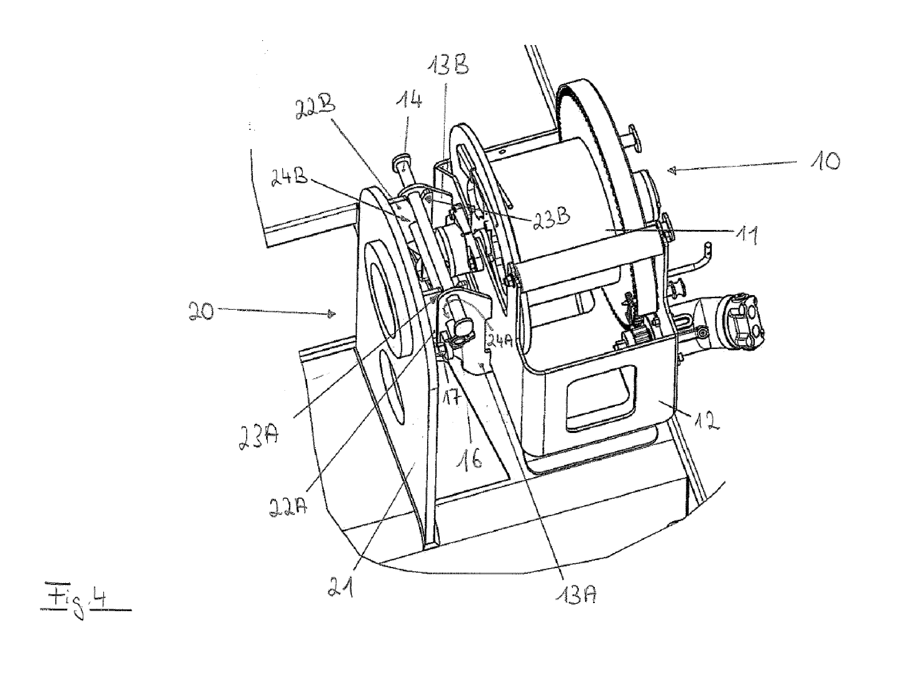

Dieses Rüstwinden-Modul kann nunmehr schnell, in einfacher Weise und sicher in einer entsprechenden Aufhängung montiert werden, und der montierte Zustand ist in der Figur 4 gezeigt. Die Aufhängung 20 der Figur 4 ist diejenige, die auch im Übersichtsbild der Figur 1 zu sehen ist, und die auf die Rüstwinde hinweisenden Bezugszeichen der Figur 4 entsprechend denjenigen der Figur 3 und bezeichnen auch dieselben Teile.

Die Aufhängung 20 weist als wesentliche Teile den nach oben aufgerichteten Träger 21 auf, der an seiner oberen rechten Seite wiederum zwei Tragplatten 22A und 22B hat. Die beiden Tragplatten haben an ihrer oberen Kante fluchtende Bolzen-Einhängeaufnahmen, die in der Art von runden Vertiefungen ausgebildet sind und in der Figur 4 mit dem Bezugszeichen 23A und 23B angedeutet werden. Beim Einhängen der Rüstwinde 10 wird bei noch herausgenommenem Sicherungsbolzen 15 der Einhängebolzen 14 von oben in die Einhängeaufnahmen 23A und 23B eingehängt, so dass die beiden windenseitigen Träger 13A und 13B die kranseitigen bzw. aufhängungsseitigen Träger 24A und 24B von außen umgreifen. Mit den Abstandshaltern 17 (Figur 3) lässt sich dann die Kipplage des Rüstwinde-Moduls 10 wenn nötig noch korrigieren - in den allermeisten Fällen sind die Abstandshalter aber schon so eingestellt, dass die Kipplage eine solche ist, dass die Durchgangslöcher 15A, 15B (Figur 3) und 24A, 24B in den Trägern 13, 23 fluchten und der Sicherungsbolzen 15 mit abgenommener Endensicherung 16 durch sowohl die windenseitigen als auch die aufhängungsseitigen Löcher 15A, 15B, 23A, 23B, hindurchgeschoben werden kann, wonach dann die Endensicherung 16 angebracht wird, die ein Herausrutschen des Sicherungsbolzens verhindert.

Damit ist die Rüstwinde mit einem schnellen, einfachen und sicheren Schnellmontagesystem am Kran gesichert und kann ihre Arbeit aufnehmen.

## Patentansprüche

1. Kran-Rüstwinde (10), insbesondere für einen Mobilkran, **dadurch gekennzeichnet, dass** sie als transportable, modulare Einheit ausgestaltet ist, deren windenseitiges Aufhängungselement (19) zur Montage am Kran ein sicherbares Schnellmontagesystem (14, 15, 16) umfasst.

2. Kran-Rüstwinde (10) nach Anspruch 1, **dadurch gekennzeichnet, dass** sie als nach außen funktionell abgeschlossenes Modul aufgebaut ist, das alle funktionswesentlichen Windenbauteile aufweist.

3. Kran-Rüstwinde (10) nach Anspruch 1 oder 2, **dadurch gekennzeichnet, dass** als Modul mit einer in einem Stahlbaurahmen (12) gelagerten Seilwinde (11) und einem an dem Stahlbaurahmen (12) angeordneten, windenseitigen Aufhängungselement (19) aufgebaut ist.

4. Kran-Rüstwinde (10) nach einem der Ansprüche 1 bis 3, **dadurch gekennzeichnet, dass** sie eine einseitige Aufhängung bzw. ein nur an einer ihrer Seiten angeordnetes Aufhängungselement aufweist.

5. Kran-Rüstwinde (10) nach einem der Ansprüche 1 bis 4, **dadurch gekennzeichnet, dass** das Aufhängungselement (19) ein Einhängesystem mit Ausrutschsicherung umfasst.

6. Kran-Rüstwinde (10) nach einem der Ansprüche 1 bis 5, **dadurch gekennzeichnet, dass** die Aufhängung (19) einen Einhängebügel oder Einhängebolzen (14) umfasst.

7. Kran-Rüstwinde (10) nach einem der Ansprüche 1 bis 6, **dadurch gekennzeichnet, dass** einen Sicherungsbolzen (15) umfasst.

8. Aufhängung für eine Kran-Rüstwinde (1) nach einem der Ansprüche 1 bis 7, mit einem kranseitigen Aufhängungselement (20) zur Montage der Kran-Rüstwinde, wobei das kranseitige Aufhängungselement (20) ein zum Schnellmontagesystem der Rüstwinde komplementäres Montagesystem umfasst.

9. Aufhängung nach Anspruch 8, **dadurch gekennzeichnet, dass** das kranseitige Aufhängungselement (20) zur einseitigen Montage der Rüstwinde, insbesondere als zur einseitiger Freiträger ausgebildet ist.

10. Aufhängung nach Anspruch 8 oder 9, **dadurch gekennzeichnet, dass** das kranseitige Aufhängungselement (20) einen Träger (21) mit einer Bügel- oder Bolzen-Einhängeaufnahme (23) aufweist.

11. Aufhängung nach einem der Ansprüche 8 bis 10, **dadurch gekennzeichnet, dass** das kranseitige Aufhängungselement (20) einen Träger (21) mit einer Aufnahme (24) für einen Sicherungsbolzen (15) aufweist.

12. Kran, insbesondere Mobilkran, mit einer Rüstwinde nach einem der Ansprüche 1 bis 7 und/oder einer Aufhängung nach einem der Ansprüche 8 bis 11.

13. Kran nach Anspruch 12, **dadurch gekennzeichnet, dass** er ein kranseitiges Aufhängungselement (20) aufweist, das an der Hilfshubwerk-Befestigung (4) angeordnet ist.

14. Kran nach Anspruch 12, **dadurch gekennzeichnet, dass** er ein kranseitiges Aufhängungselement (20) aufweist, das an bzw. auf einem Gegengewichtselement (5) angeordnet ist.

15. Kran nach Anspruch 12, **dadurch gekennzeichnet, dass** er mehrere kranseitige Aufhängungselemente (20) aufweist, insbesondere an der Hilfshubwerk-Befestigung (4) und/oder an oder auf einem Gegengewichtselement (5).
